# EUROPÄISCHE PATENTSCHRIFT

(11) **EP 0 659 612 B1**
(45) Veröffentlichungstag und Bekanntmachung des Hinweises auf die Patenterteilung: **01.07.1998**
(21) Anmeldenummer: 94119488.8
(22) Anmeldetag: 09.12.1994
(51) Int. Cl.: B60R 13/10, B32B 5/20, B60J 3/02

(54) **Verwendung von PVC-freien Verbundwerkstoffen mit textiler Oberseite zur Kaschierung von Sonnenblenden in Kraftfahrzeugen**
Use of PVC-free composite material with textile toplayer for coating sunvisors of motor vehicles
Utilisation de matériau composite exempt de PVC avec une couche textile supérieure pour revêtir des par-soleil de véhicules

(30) Priorität: 21.12.1993 DE 4343621
(43) Veröffentlichungstag der Anmeldung: 28.06.1995
(73) Patentinhaber: BSU Beteiligungs-GmbH & Co. KG, 72805 Lichtenstein (DE)
(72) Erfinder: Dürkop, Joachim, Dr. Ing., D-72793 Pfullingen (DE); Krämer, Steffen, D-72764 Reutlingen (DE)
(74) Vertreter: Grussdorf, Jürgen, Dr.

(56) Entgegenhaltungen:
- EP-A- 0 555 476
- AU-A- 4 066 972
- DE-A- 3 612 834
- DE-A- 4 015 120
- DE-A- 4 121 401
- GB-A- 2 010 123

## Beschreibung

Die vorliegende Erfindung betrifft die Verwendung von PVC-freien Verbundwerkstoffen mit textiler Oberfläche zur Kaschierung von Sonnenblenden in Kraftfahrzeugen.

Textile Flächengebilde, vornehmlich aus synthetischen Fasern, finden heute als Gewebe, Gestricke, Gewirke, non-woven usw. zunehmend Einsatz im Automobilinnenausbau zur Verkleidung von Türen, Sitzrückseiten, Autohimmel, Hutablage, Gummidichtungen usw. sowie zum Bespannen von Sitzpolstern, zur Auskleidung des Fußbodenraumes und des Kofferraumes. Sie haben den Vorteil, daß sie gut verformbar sind und den Fahrzeuginnenraum optisch sehr wertig machen und auch vom Sitz- und Griffverhalten her komfortabel sind. Aus ästhetischen Gründen ist es dabei erwünscht, daß die sichtbare, textile Seite für alle diese Anwendungen gleich oder ähnlich aussieht. Dies stellt jedoch zusätzliche Anforderungen an die Verarbeitbarkeit der Materialien, da größere Flächen, wie Autositze oder Böden mit entsprechenden textilen Flächengebilden bespannt werden, während Verkleidungen von Türen, Sitzrückseiten, Autohimmel, Hutablagen oder auch Kofferraumauskleidungen häufig durch Tiefziehen/Preßverformung mit bei Raumtemperatur formstabilen anderen Trägern oder durch Hinterspritzen mit geschmolzenen Polymeren hergestellt werden. Ein besonders schwieriges Teil stellen in diesem Zusammenhang die Sonnenblenden , z. T. mit integriertem Spiegel dar, welche üblicherweise durch Hochfrequenzverschweißung einer PVC-Folie mit hinterfüttertem PVC-Schaum hergestellt werden. Schaumhinterfütterte textile Flächengebilde empfehlen sich aus Gründen der besseren Optik auch hierfür, doch scheitert dieser Einsatz bei PVC-freien Konstruktionen bisher an der nicht möglichen randlosen Hochfrequenzverschweißbarkeit solcher textilen Verbundwerkstoffe. Dieses heute praktizierte Verfahren, Verschweißen zweier Lagen bei gleichzeitigem Abtrennen der Überstände, ist durch seine Einstufigkeit sehr kostengünstig. Darüber hinaus wird zunehmend die Verwendung von PVC als Werkstoff aus Umweltschutzgründen problematisch. Andererseits sollten Kunststoffe heute möglichst recyclisierbar sein, was nur möglich ist, wenn bei solchen Verbundwerkstoffen alle Teile aus dem gleichen Kunststoff bestehen oder zumindest sortenverwandt sind.

Es stellte sich daher die Aufgabe, Verbundwerkstoffe mit einer textilen Oberfläche zu finden, welche einerseits hochfrequenzverschweißbar sind, und andererseits aus einem PVC-freien Kunststoff bestehen. Für die vorgesehene Verwendung zum Verkleiden von Sonnenblenden im Automobilbau stellt sich ferner die Aufgabe, daß dieser Kunststoff einerseits zu Textilien verarbeitbar ist, andererseits im Verbund eine schaumfähige Laminatschicht bilden kann, welche mit der Textilseite verschäumbar ist und ggf. eine geschlossenporige Schicht als Rückseitenkaschierung bilden kann.

In Frage kommende Polymere sind: Polymere aus Vinylacetat, Polyestern, Polyamiden und/oder Polyacrylaten und Copolymere mit Polyethylen, Polypropylen. Aus solchen Polymeren gefertigte textile Materialien sind bekannt und in vielen Ausführungen im Handel erhältlich.

Da die textilen Flächengebilde anschließend zu Verbundwerkstoffen weiterverarbeitet werden sollen, in dem sie mit entsprechenden Schaumschichten und Kaschierungen verbunden werden, muß ihr Schmelzindex so gewählt werden, daß die Fasern weder beim Beschichtungsvorgang thermisch geschädigt werden, noch stark schrumpfen, oder bei der späteren Anwendung im Innenraum des KFZ durch Sonneneinstrahlung oder Gewichtsbelastung sich zu verformen beginnen. Die Kunststoffe aus denen die Textilien hergestellt werden, sollten daher einen Schmelzbereich von etwa 140 bis 300 °C aufweisen.

Für die Kaschierung mit einer Schaumschicht kann nach dem Verfahren der DE-A 41 35 937, welches die Herstellung von PVC-freien geschäumten Boden- und Wandbelägen betrifft, in analoger Weise gearbeitet werden, in dem man eine textile Trägerschicht, die den vorstehenden Eigenschaften entspricht, mit einer Pulvermischung gleichmäßig bestreut, welche aus
100 Teilen eines thermoplastischen Polymeren
0 - 100 Teilen Füllstoff
0,5 - 7 Teilen Treibmittel und
0 - 30 Teilen Hilfsstoff besteht.

Das thermoplastische Polymer sollte aus der gleichen Kunststoffklasse wie das Polymer des textilen Trägermaterials bestehen, im Unterschied zu diesem jedoch einen um etwa 10 - 50 °C niedereren Schmelzpunkt besitzen.

Als Treibmittel für die Schaumschicht werden z. B. die in der DE-A 41 35 937 beschriebenen Stoffe wie Azodicarbonamid, Oxybis-benzolsulfonhydrazit, Azoisobuttersäuredinitril, Toluolsulfohydrazit und andere verwendet. Durch entsprechende Aktivatoren, beispielsweise Zinkoxid, Zinkoctoat etc. wird die Zersetzungstemperatur der Treibmittel so eingestellt, daß sie in dem Intervall zwischen dem Schmelzpunkt des thermoplastischen, aufzuschäumenden Polymeren und dem Schmelzpunkt der textilen Träger liegt. Vorzugsweise liegt die Temperatur etwa 5 bis 10° oberhalb von dem Schmelzbereich des thermoplastischen Polymeren und mindestens 5° unterhalb von dem Schmelzpunkt des textilen Trägers.

Als Füllstoffe sind alle diejenigen möglich, die auch sonst oft zum Füllen von Kunststoffen verwendet werden, beispielsweise seien anorganische Füllstoffe wie Kreide, Silikate, Magnesium- oder Aluminiumhydroxid, Schwerspat, Kieselsäure, Glaspulver, Ruß, Titandioxid oder auch andere Farbpigmente, welche gleichzeitig die Lichtdurchlässigkeit des Schaumes verändern, genannt. Als organische Zuschlagsstoffe kommen Holz oder Korkmehl oder auch temperaturbeständige Kunststoffe wie Polyurethane in Frage. Bevorzugte Füllstoffe sind die für das textile Material verwendeten Kunststoffe bzw. gemahlene Reste aus dem Verbundwerkstoff selbst.

Als Hilfsstoffe seien ferner Bakterizide, Antistatika, Antioxidantien usw., wie sie in der Kunststoffverarbeitung üblich sind, erwähnt.

Alle vorstehenden Produkte sind handelsüblich erhältlich und werden zur Verarbeitung auf Korngrößen von max. 400 bis 600 µm, vorzugsweise 10 bis 100 µm vermahlen und in dieser Form mit den übrigen Komponenten vermischt. Die Mischungen werden, wie es der DE-A-41 35 937 beschrieben ist, über handelsübliche Pulverstreumaschinen auf den auf einem Transportband aufliegenden textilen Träger aufgestreut, in einem Ofen über die Schmelztemperatur des thermoplastischen Polymers erhitzt, zwischen Glättwalzen geglättet und anschließend in einem Schäumofen durch Erhitzen über den Zersetzungspunkt des Treibmittels aufgeschäumt. Der Verbund kann anschließend direkt zur Zwischenlagerung aufgerollt oder mit einer weiteren Schicht, beispielsweise einer nicht geschäumten Deckschicht versehen werden, welche entweder in üblicher Weise als vorgefertigte Folie aufkaschiert oder in gleicher Weise durch Aufstreuen eines nichttreibmittelhaltigen Pulvers und Angelieren erzeugt wird.

Um die Belastung der textilen Träger besonders gering zu halten, ist es möglich, als schaumbildende Polymere Kunststoffe zu verwenden, die einen besonderes niederen Schmelzpunkt, beispielsweise im Bereich vom 70 bis 110°C besitzen und diese unter den Bedingungen der Schaumbildung nachträglich zu vernetzen, beispielsweise durch Zugabe von Peroxid oder durch Behandlung mit ernergiereicher Strahlung, wodurch der Gesamtverbund die erhöhte Temperaturstabilität erreicht, welche z. B. auch bei starker Sonneneinstrahlung auf die mit dem Verbund kaschierten Teile verhindert, daß diese erweichen.

In den folgenden Beispielen ist die Erfindung näher erläutert.

### Beispiel 1

| Ethylenvinylacetatschäume | |
|---|---|
| EVA (Acetatgehalt 28 %) | 100 kg |
| Aluminiumhydroxid | 20 kg |
| Treibmittelgemisch (Azodicarbonamid, Zinkoxid) | 3,5 kg |
| Zinkoctoat | 1 kg |
| Antistatikum | 1 kg |
| Peroxid | 5 kg |

### Beispiel 2

| Polyamidschäume | |
|---|---|
| Polyamid 66 | 100 kg |
| Azodicarbonamid | 2 kg |
| Zinkoxid/Zinkoctoat | 10 kg |
| Antistatikum | 6 kg |
| Titandioxid | 10 kg |

### Beispiel 3

| Polyesterschaum | |
|---|---|
| Thermoplastisches Copolyester (100 - 500 µm) | 1.000 kg |
| Azodicarbonamid | 30 kg |
| Antistatikum (Irgastat 51) | 15 kg |

### Beispiel 4

### Herstellung von hinterschäumtem Textilgewebe

Eine 1 m breite Gewebebahn aus Polyamid 66, Flächengewicht 250 g/m², wird kontinuierlich über ein Förderband geleitet und mit einer Pulvermischung gemäß Beispiel 2 in einer Menge von 300 g/m² mit einer Pulverstreumaschine bestreut. Anschließend wird die Beschichtung in einem Ofen mit IR-Bestrahlung von oben angeschmolzen, zwischen 110°C beheizten Walzen egalisiert und in einem weiteren Schäumofen auf 125°C erhitzt und ausgeschäumt. Der ausgeschäumte Verbund läuft nochmals eine Kühl- und Glätt-Trommel und wird anschließend zur Zwischenlagerung aufgerollt.

Für die Verarbeitung werden Stücke entsprechender Größe abgetrennt und mit einer Hochfrequenzverschweißapparatur beispielsweise um eine Kunststoffsonnenblende verschweißt und die überstehenden Teile gleichzeitig abgetrennt.

## Patentansprüche

1. Verwendung von Verbundwerkstoffen zur Kaschierung von Sonnenblenden in Pkws bestehend aus einer Deckschicht und einer geschäumten Rückseite, **dadurch gekennzeichnet**, daß die Deckschicht aus einem textilen Gewebe besteht und die geschäumte Schicht aus einer Pulvermischung bestehend aus
100 Teilen eines thermoplastischen Polymeren
0 - 100 Teilen Füllstoff
0,5 - 7 Teilen Treibmittel und
0 - 30 Teilen Hilfsstoff
durch Aufstreuen und anschließendes Verschmelzen und Aufschäumen hergestellt ist und Textilschicht und Schaumschicht aus einem hochfrequenzverschweißbaren PVC-freien Material der gleichen Kunststoffamilie bestehen.

2. Verwendung gemäß Anspruch 1, **dadurch gekennzeichnet**, daß der Kunststoff des textilen Gewebes einen Schmelzpunkt besitzt, der 20 bis 50°C höher liegt als der Schmelzpunkt des aufzuschäumenden Kunststoffes.

3. Verwendung gemäß Anspruch 1 oder 2, **dadurch gekennzeichnet**, daß der aufzuschäumende Kunststoff einen Schmelzpunkt von 70 bis 110°C aufweist und durch Vernetzung mit Peroxid und/oder energiereicher Strahlung während des Schäumvorganges auf eine Schmelzpunkt von über 120°C gebracht wird.

4. Verwendung gemäß Anspruch 1 bis 3, **dadurch gekennzeichnet**, daß als Kunststoffe solche aus der Familie der Polyamide, Polyester, Polyacrylate sowie deren Copolymerisate mit Polyethylen und Polypropylen ausgewählt werden.

5. Verwendung gemäß Anspruch 1 bis 4, **dadurch gekennzeichnet**, daß die Schaumschicht mit einer zusätzlichen Kaschierfolie aus dem gleichen Kunststoff verbunden ist.

## Claims

1. Use of composite work materials for the lamination of sunshades in motor cars, consisting of a cover layer and a foamed rear side, characterised in that the cover layer consists of a textile fabric and the foamed layer is produced from a powder mixture consisting of
100 parts of a thermoplastic polymer
0 - 100 parts of filling material
0.5 - 7 parts of foaming agent and
0 - 30 parts of adjuvant
by sprinkling on and subsequent melting and foaming up and textile layer and foam layer consist of a high frequency weldable PVC-free material of the same synthetic material family.

2. Use according to claim 1, characterised in that the synthetic material of the textile fabric possesses a melting point which lies 20 to 50°C higher than the melting point of the synthetic material to be foamed up.

3. Use according to claim 1 or 2, characterised in that the synthetic material to be foamed up has a melting point of 70 to 110°C and is brought to a melting point of above 120°C by cross-linking with peroxide and/or energy-rich radiation during the foaming procedure.

4. Use according to claim 1 to 3, characterised in that, as synthetic materials, those are selected from the family of the polyamides, polyesters, polyacrylates, as well as their copolymers with polyethylene and polypropylene.

5. Use according to claim 1 to 4, characterised in that the foam layer is connected with an additional lamination foil of the same synthetic material.

## Revendications

1. Utilisation de matériaux composites pour le revêtement de pare-soleils de véhicules automobiles, constitués d'une couche de recouvrement et d'une couche dorsale expansée, caractérisée en ce que la couche de recouvrement est constituée d'un tissu texte et en ce que la couche expansée est fabriquée à partir d'une composition en poudre constituée de
100 parts d'un polymère thermoplastique,
0 à 100 parts de matière de charge
0,5 à 7 parts d'agent d'expansion et
0 à 30 parts d'adjuvant
par épandage et par fusion et expansion subséquentes et en ce que la couche textile et la couche de mousse sont constituées d'un matériau exempt de PVC, soudable à haute fréquence, de la même famille de matières synthétiques.

2. Utilisation selon la revendication 1, caractérisée en ce que la matière synthétique du tissu textile présente un point de fusion supérieur de 20 à 50 °C au point de fusion de la matière synthétique à expanser.

3. Utilisation selon la revendication 1 ou 2, caractérisée en ce que la matière synthétique à expanser présente un point de fusion de 70 à 110 °C et est portée à un point de fusion supérieur à 120 °C par réticulation avec du peroxyde et/ou avec un rayonnement énergétique pendant le processus d'expansion.

4. Utilisation selon la revendication 1 à 3, caractérisée en ce qu'on choisit à titre de matières synthétiques celles de la famille des polyamides, des polyesters, des polyacrylates, de même que leurs copolymères avec le polyéthylène et le polypropylène.

5. Utilisation selon la revendication 1 à 4, caractérisée en ce que la couche de mousse est raccordée à un film de revêtement supplémentaire constitué de la même matière synthétique.
